# FASCICULE DE BREVET EUROPEEN

(11) **EP 2 419 619 B1**
(45) Date de publication et mention de la délivrance du brevet: **11.05.2016**
(21) Numéro de dépôt: 10723212.6
(22) Date de dépôt: 06.04.2010
(51) Int. Cl.: F02K 1/70, F02K 1/76, F02K 1/12, B64C 13/50, G05B 9/03

(54) **SYSTÈME DE CONTRÔLE POUR NACELLE DE TURBORÉACTEUR**
STEUERSYSTEM FÜR EINE STRAHLTRIEBWERKSGONDEL
CONTROL SYSTEM FOR A TURBOREACTOR NACELLE

(30) Priorité: 16.04.2009 FR 0952509
(43) Date de publication de la demande: 22.02.2012
(73) Titulaire: Aircelle, 76700 Gonfreville l'Orcher (FR); HISPANO-SUIZA, 92700 Colombes (FR)
(72) Inventeur: MAALIOUNE, Hakim, F-78630 Orgeval (FR); LE-COQ, Vincent, F-76430 Saint Romain-de-Colbosc (FR); MORADELL-CASELLAS, Pierre, F-61100 Saint Georges des Groseillers (FR); HADJIDJ, Djemouai, F-91300 Massy (FR); GARCIA SOTO, Guillermo, F-91300 Massy (FR)
(74) Mandataire: Gaillarde, Frédéric F. Ch.
(86) Numéro de dépôt international: PCT/FR2010/050662
(87) Numéro de publication internationale: WO 2010/119209

(56) Documents cités:
- EP-A- 1 413 735
- EP-A- 1 413 736
- EP-A- 1 413 737
- FR-A- 2 882 097
- GB-A- 2 372 729
- US-A1- 2003 101 712

## Description

La présente invention se rapporte à un système de contrôle d'une pluralité d'actionneurs aptes à déplacer un panneau mobile appartenant à une nacelle d'aéronef.

Les nacelles d'aéronef sont destinées à abriter un turboréacteur, notamment un turboréacteur à double flux capable de générer un flux d'air chaud (également appelé flux primaire) issu de la chambre de combustion du turboréacteur, et un flux d'air froid (flux secondaire) issu de la soufflante qui circule à l'extérieur du turboréacteur à travers un canal annulaire, également appelé « veine », formé entre un carénage du turboréacteur et une paroi interne de la nacelle. La section d'éjection du flux secondaire est appelée « tuyère secondaire » tandis que l'éjection du flux primaire est réalisé dans la tuyère primaire. A l'arrière de la nacelle les deux flux primaires et secondaires se mélangent.

Cette nacelle est alors généralement équipée d'un inverseur de poussée. L'inverseur de poussée lors de l'atterrissage d'un avion permet d'améliorer la capacité de freinage de l'avion en redirigeant vers l'avant au moins une partie de la poussée générée par le turboréacteur. Dans cette phase, l'inverseur obstrue la tuyère d'éjection des gaz et dirige le flux d'éjection du moteur vers l'avant de la nacelle, générant de ce fait une contre-poussée qui vient s'ajouter au freinage des roues de l'avion.

Dans cette optique, l'inverseur de poussée comprend des moyens d'inversion de poussée variés, comme en général au moins un capot mobile, dits « capots d'inversion de poussée », se mouvant en translation grâce à des actionneurs selon une direction sensiblement parallèle à un axe longitudinal de la nacelle. Ainsi, le ou les capots mobiles sont aptes à passer alternativement d'une position de fermeture dans laquelle le(s) capot(s) d'inversion de poussée assure(nt) la continuité aérodynamique de la nacelle, à une position d'ouverture dans laquelle un passage est découvert sur une structure fixe de la nacelle pour renverser le flux secondaire.

En outre, un dispositif supplémentaire peut notamment permettre de faire varier la section de la tuyère secondaire variable. Bien qu'il existe plusieurs modes de réalisation, il est connu d'employer comme dispositif une multitude de volets de tuyère aptes à pivoter à l'intérieur de la veine de sorte à faire varier la largeur de cette dernière. Ainsi, il est possible d'adapter la section de la tuyère secondaire, de façon à optimiser la consommation spécifique du turboréacteur ou de réduire le bruit d'éjection des gaz suivant les phases de vol.

A titre d'exemple particulier, on peut citer le mode de réalisation décrit dans la demande de brevet 08/04295 où les volets de tuyère sont situés en sortie de la veine et servent également à réaliser une variation de tuyère secondaire lors d'une translation limitée de(s) capot(s) d'inversion de poussée.

Les volets de tuyère et les capots d'inversion de poussée constituent des panneaux mobiles. Le déplacement de tels panneaux est assuré par une pluralité d'actionneurs.

Les actionneurs peuvent être sous différentes formes, notamment sous la forme d'actionneurs électromécaniques comme ceux décrits dans le document EP 0 843 089.

Ce type d'actionneurs est associé à un système de contrôle comprenant au moins deux moteurs aptes à entraîner lesdits actionneurs. Le système de contrôle est destiné notamment à alimenter électriquement les moteurs et à contrôler le fonctionnement de ces derniers voir EP1413736, EP1413735.

La disponibilité du système de variation de section de tuyère secondaire est une considération importante et constitue un axe directeur du développement des actionneurs électromécaniques.

Le critère de disponibilité s'entend de la capacité pour les moyens à être déployés afin de remplir leur fonction de réglage du cycle du turboréacteur et d'éviter un fonctionnement en mode dégradé. Il nécessite un niveau de redondance de moyens, sans toutefois dégrader sévèrement la fiabilité de l'ensemble du dispositif, et une architecture appropriée pour minimiser les modes communs tels que des blocages mécaniques.

Un but de la présente invention est donc de fournir un système de contrôle d'une pluralité d'actionneurs aptes à déplacer un panneau mobile présentant une grande disponibilité.

A cet effet, selon un premier aspect, l'invention a pour objet un système de contrôle d'une pluralité d'actionneurs aptes à déplacer un panneau mobile appartenant à une nacelle d'aéronef, ledit système comprenant au moins deux moteurs aptes à entraîner lesdits actionneurs, caractérisé en ce qu'il comporte en outre deux unités de commande distinctes, chaque unité étant configurée pour contrôler et alimenter au moins un moteur ni alimenté ni contrôlé par l'autre unité de commande.

Ainsi, le système de contrôle de l'invention comprend deux moteurs voire plus par panneau mobile. Au moins un moteur appartenant audit système de contrôle de l'invention est alimenté et contrôlé par une unité de commande différentes des autres moteurs.

La présente invention permet de conserver le fonctionnement par le biais de la transmission de l'inverseur de poussée et/ou du système de variation de section secondaire lorsque une des deux unités de commande ne fonctionne plus. La transmission électrique de puissance aux moteurs peut être effectuées avec une seule unité de commande disponible ce qui permet d'augmenter la disponibilité de l'inverseur de poussée.

Selon d'autres caractéristiques de l'invention, le système de l'invention comporte l'une ou plusieurs des caractéristiques optionnelles suivantes considérées seules ou selon toutes les combinaisons possibles :
- les unités de commande sont dissociées et alimentées chacune par une source d'alimentation, les sources d'alimentation étant indépendantes les unes des autres ;
- les unités de commande sont regroupés au sein d'une unité principale ;
- chaque unité délivre une puissance suffisante pour qu'un seul moteur puisse actionner tous les actionneurs ;
- le système de l'invention comporte en outre des moyens de blocage aptes à immobiliser les actionneurs du système ;
- les moyens de blocage sont des verrous primaires associés à un verrou tertiaire alimenté par une source d'alimentation distincte des deux unités de commande ;
- les unités de commande comprennent chacun un moyen d'arrêt interne apte à arrêter l'alimentation des moyens de blocage, les deux moyens d'arrêt internes étant reliés entre eux et à un moyen d'arrêt externe commandé indépendamment des unités de commande ;
- chaque moyen d'arrêt interne est apte à être commandé par un calculateur d'aéronef configuré pour traiter des données issues de l'aéronef et par un calculateur de nacelle configuré pour traiter des données issues du turboréacteur, lesdits calculateurs étant distincts et autonomes.
- le moyen d'arrêt externe est apte à être commandé par le calculateur de l'aéronef ;
- le calculateur de nacelle comporte un moyen de synchronisation électrique des moteurs ;
- les signaux des états des moyens de blocage sont gérés par le calculateur de nacelle ;
- le calculateur de nacelle est alimenté par deux sources électriques distinctes aptes à être maintenues sous tension au cours du vol de l'aéronef et/ou aptes à être coupées ;
- chaque unité de commande comporte un moyen de synchronisation logique relié à un moyen d'arrêt interne et à une entrée d'un calculateur du turboréacteur ;
- chaque moyen d'arrêt interne et/ou externe comprend un interrupteur et un dispositif de commande.

Selon un autre aspect, l'invention a pour objet une nacelle pour turboréacteur à double flux comportant une structure externe délimitant un canal annulaire d'écoulement du flux d'air froid, ladite structure externe comprenant au moins un panneau mobile équipé d'un système de contrôle selon l'une quelconque des revendications précédentes.

Selon un mode de réalisation, le panneau mobile est un capot d'inversion de poussée apte à se déplacer sensiblement latéralement.

Le panneau mobile peut être un volet de tuyère monté de manière pivotant de sorte à réduire la largeur du canal annulaire.

Selon encore un mode de réalisation avantageux, la nacelle comporte au moins un capot d'inversion de poussée et au moins un panneau de tuyère.

L'invention sera davantage comprise à la lecture de la description non limitative qui va suivre, faite en référence aux figures ci-annexées.
- La figure 1 est une représentation schématique en coupe longitudinale d'un premier mode de réalisation d'une nacelle selon l'invention ;
- Les figures 2 et 3 sont des coupes longitudinales de la section aval de la nacelle de l'invention ;
- Les figures 4 et 5 sont un exemple de mode de réalisation du système de contrôle de l'invention associé à une paire de panneaux mobiles;
- La figure 6 est une représentation schématique d'un mode de réalisation de moyens de blocage appartenant au système de contrôle de l'invention.

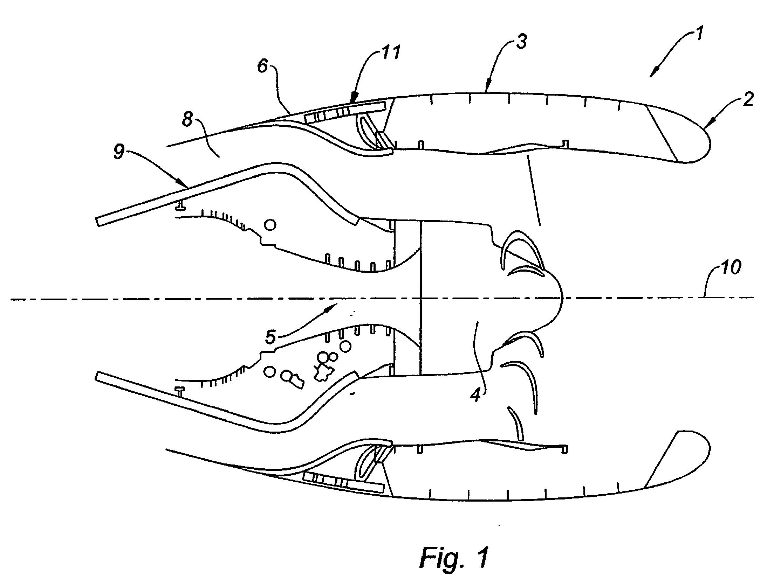

Selon le mode de réalisation représenté à la figure 1, une nacelle 1 selon l'invention comprend une structure amont d'entrée d'air 2, une structure médiane 3 entourant une soufflante 4 d'un turboréacteur 5, et une structure aval. La structure aval comporte de manière connue en soi une structure externe 6, dite OFS, abritant des moyens d'inversion de poussée 7, et une structure interne 9, dite IFS, destinée à couvrir la partie aval du turboréacteur 5. La nacelle 1 est fixée en aval par l'intermédiaire de tout moyen approprié, notamment de bielles, à un mât de suspension, non représenté, destiné au rattachement de la nacelle 1 sous une aile d'aéronef.

La structure externe 6 et la structure interne 9 définissent un canal annulaire 8 d'écoulement du flux d'air froid.

La structure interne 9 est destinée à couvrir une section aval 11 du turboréacteur s'étendant en aval de la soufflante.

La section aval 11 peut être équipée d'un inverseur de poussée, comme un inverseur de poussée à grille.

Dans ce cas, la structure externe 6 comprend au moins un capot d'inversion de poussée 13 monté mobile en translation selon un axe 10 sensiblement longitudinal de la nacelle 1 entre une position de fermeture dans laquelle le ou les capots d'inversion de poussée 13 assurent la continuité aérodynamique de la nacelle 1 et une position d'ouverture dans laquelle le ou les capots d'inversion de poussée 13 dégagent une ouverture dans la nacelle 1 en découvrant des moyens d'inversion du flux froid (typiquement des grilles d'inversion, non référencées mais visibles en arrière de l'actionneur 15).

Selon une variante, la nacelle 1 peut comporter un unique ou au contraire deux, voire plus de deux capots d'inversion de poussée. En outre, les capots d'inversion de poussée peuvent être liés entre eux de sorte que le déplacement d'un des capots 13 entraîne le déplacement des autres capots 13.

La structure externe 6, et en l'espèce les capots d'inversion de poussée 13, est prolongée par une section de tuyère comprenant une pluralité de volets de tuyère 17 montés à une extrémité aval dudit capot d'inversion de poussée 13.

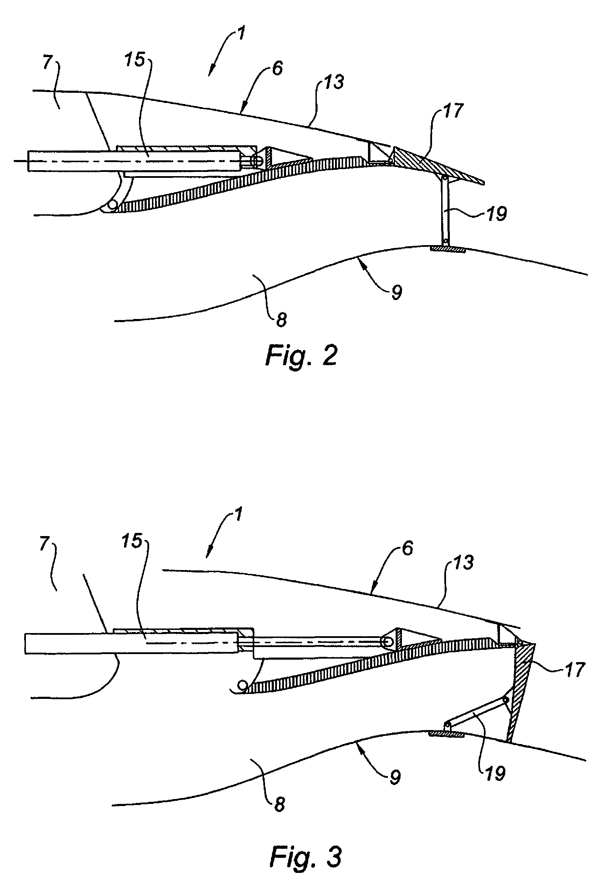

Chaque volet de tuyère 17 est par exemple monté pivotant par une bielle 19 permettant au volet 17 en se déplaçant de diminuer la largeur de la du canal annulaire 8 au moins partiellement, voire totalement (voir figure 3).

Ainsi, lors de son ouverture, le capot d'inversion de poussée 13 entraîne en rotation le volet de tuyère 17 qui vient obturer au moins partiellement le canal 8 et ainsi optimiser l'inversion du flux d'air froid.

Ainsi, les capots d'inversion de poussée 13 et les volets tuyères 17 constituent des panneaux mobiles aptes à être déplacés par une pluralité d'actionneurs 15.

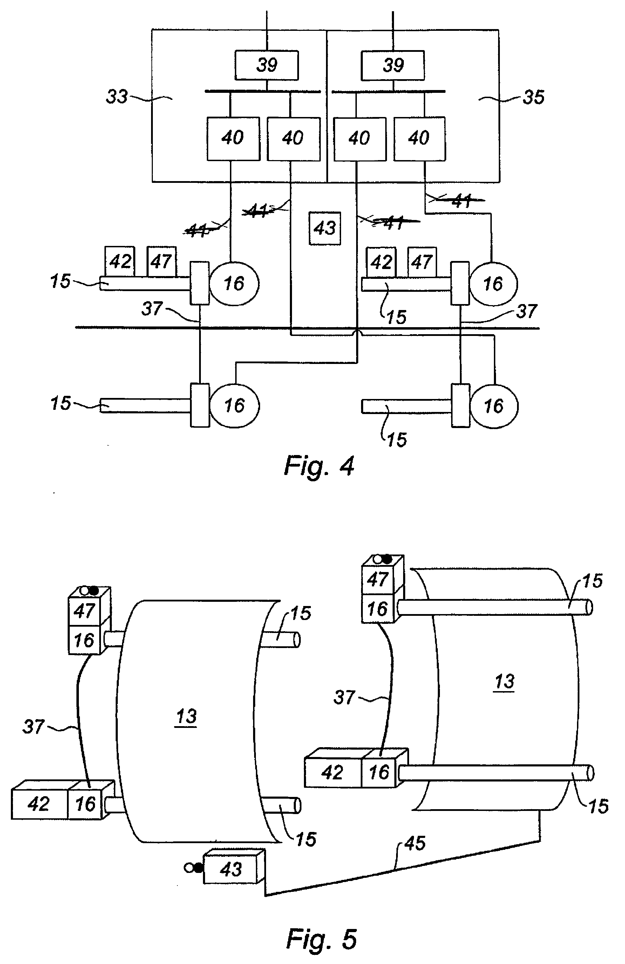

Selon le mode de réalisation des figures 4 et 5, chaque capot 13 est équipé de deux actionneurs de type électriques alimentés chacun par un moteur électrique. Un actionneur 15 électrique peut être sous la forme d'un vérin monté sur la structure fixe (cadre avant) de la structure externe 6. Selon une variante, le nombre d'actionneurs 15 sur un panneau mobile 13, 17 peut être supérieur à deux, voire égale à trois, quatre ou plus.

La nacelle 1 comporte un système de contrôle de l'invention permettant de contrôler le déplacement des actionneurs 15 d'un panneau mobile.

Ledit système de contrôle comprend au moins deux moteurs 16 aptes à entraîner lesdits actionneurs 15 (voir figure 4 et 5).

Selon un mode de réalisation, chaque actionneur 15 peut être lié à un moteur 16 qui lui est propre. Selon une autre variante, une partie des actionneurs peut être liée à plus de deux moteurs, les autres actionneurs étant alors reliés à cette partie d'actionneurs de sorte à pouvoir être entraînés.

Le système de contrôle comporte en outre deux unités de commande distinctes 33, 35, chaque unité 33 et 35 étant configurée pour contrôler et alimenter au moins un moteur 16 ni alimenté ni contrôlé par l'autre unité de commande 35 et 33.

Ainsi, le système de contrôle de l'invention comprend deux moteurs voire plus par panneau mobile. Au moins un moteur appartenant audit système de contrôle de l'invention est alimenté et contrôlé par une unité de commande différentes des autres moteurs.

De manière avantageuse, si une unité de commande 33 ou 35 ne fonctionne plus, l'autre unité de commande 35 ou 33 alimente toujours le ou les moteurs 16 liés à elle. De ce fait, le panneau mobile 13, 17 est entraîné par le ou les actionneurs 15 dont le moteur 16 est encore alimenté.

Ainsi, la disponibilité des moyens d'inversion de poussée sont augmentées dans la mesure où, en cas de disfonctionnement d'une unité 33, 35, le panneau mobile 13, 17 est entraîné par au moins un actionneur 15.

En outre, la nacelle 1 comporte uniquement deux unités de commande 33 et 35 pour alimenter tous les moteurs 16 et non plus une unité de commande par moteur. Ainsi, l'encombrement dû à l'alimentation desdits moteurs 16 se trouve réduit.

Selon un mode de réalisation, les moteurs 16 sont tous mécaniquement liés entre eux, par exemple par des câbles flexibles (« flexshaft »). Avantageusement, lorsqu'une panne apparaît au niveau d'une unité de commande 33 ou 35, tous les actionneurs 15 sont entraînés par la transmission mécanique.

Selon encore un autre mode de réalisation, la nacelle 1 comporte un système d'actionnement configuré pour actionner les actionneurs 15. Ledit système comprend les moteurs 16 alimentés par les deux unités d'alimentation 33 et 35 et aptes à entraîner lesdits actionneurs 15. Les actionneurs 15 sont également reliés mécaniquement entre eux par une transmission mécanique 37. Ainsi, en cas de disfonctionnement d'une unité 33 ou 35, le ou les moteurs 16 entraînés par l'autre unité 33 ou 35 suffit à actionner tous les actionneurs 15 pour déplacer le panneau mobile 15.

La transmission mécanique 37 est typiquement choisie de sorte à minimiser le retard d'actionnement des deux moteurs 16 restants en cas de panne. De ce fait, le retard entre les actionneurs 15 d'un panneau mobile est réduit.

La transmission mécanique 37 peut comporter un ou plusieurs câbles flexibles afin de permettre une installation aisée dans la nacelle.

Selon un mode de réalisation, un seul actionneur ou une partie des actionneurs est configuré pour être entraîné par tous les moteurs, les autres actionneurs étant entraînés par une ou plusieurs transmissions mécaniques.

Préférentiellement, chaque unité 33, 35 est apte à délivrer une puissance suffisante pour qu'un unique moteur 16 puisse entraîner tous les actionneurs 15. Ainsi, en cas de panne une unité de commande 33 ou 35 peut faire fonctionner les actionneurs 15. Chaque unité de commande 33 et 35 est autonome bien qu'en mode nominal, les deuxunités 33 et 35 sont nécessaires.On augmente ainsi encore la disponibilité des moyens d'inversion de poussée.

Usuellement, des flexibles arbres de transmission de synchronisation supplémentaires sont nécessaires pour transmettre la puissance ou synchroniser les positions des actionneurs. Un calculateur de nacelle apte à recueillir des données issues du turboréacteur 5 et de la nacelle 1 peut également synchroniser le contrôle de la position des moteurs 16 par une commande électrique pour s'affranchir des flexibles de synchronisation. Ainsi, il n'est plus nécessaire de régler ces flexibles entre eux à chaque verrouillage des panneaux mobiles 13, 17 lors de maintenance, ce qui permet de gagner du temps.

Les unités de commande 33 et 35 peuvent être sont regroupés au sein d'une unité principale. Selon une variante, les unités de commande 33 et 35 peuvent être dissociées et alimentées chacune par une source d'alimentation, les sources d'alimentation étant indépendantes les unes des autres. Ainsi, il est possible de minimiser le risque de panne des deux unités, notamment de panne de type court-circuit.

De manière préférentielle, chaque unité de commande 33 et 35 comporte un dispositif de contrôle 39 commandant au moins un onduleur 40 alimentant un ou plusieurs moteurs 16 (non représenté). Le dispositif de contrôle 39 permet de contrôler et de gérer la puissance du redressement de jusqu'à chaque onduleur 40.

Dans le cas où chaque onduleur 40 alimente un moteur 16, les moteurs 16 sont alors contrôlés de manière indépendante. Ainsi, si un onduleur 40 ne fonctionne plus, le moteur 16 non alimenté est entraîné par l'autre moteur 16 de la paire d'actionneurs par l'intermédiaire de la transmission mécanique 37.

La nacelle 1 peut comporter des moyens de contrôle de la vitesse de chaque moteur 16 aptes à corriger ladite vitesse de ce dernier. Ainsi, il est possible de contrôler la vitesse de chaque moteur 16 de sorte à permettre un déplacement homogène des capots d'inversion de poussée 13.

Typiquement, les moyens de contrôle correspondent à un organe de mesure de position comprenant par exemple un « resolver » et délivrant en continu au moins une valeur permettant de déterminer la position du moteur et de permettre son contrôle. Plus précisément un « resolver » est un capteur de position angulaire dont il est possible de calculer une position par rapport à une référence fixe choisie. Il est possible d'y adjoindre un dispositif de mesure de position angulaire « résolver » ou linéaire « LVDT » pour disposer d'une mesure absolue précise de la position de l'actionneur, notamment de la tige de vérin, au panneau mobile.

De manière avantageuse, les organes de position ainsi que les compteurs de tour d'un actionneur 15 peuvent être également alimenté chacun par une des deux unités de commande 33 ou 35.

En outre, la nacelle 1 peut comporter des moyens de synchronisation électrique des moteurs 16 entre eux afin de garantir un déplacement sensiblement synchronisé des panneaux mobiles 13, 17 entre eux.

De ce fait, on limite le risque d'un déplacement plus rapide d'un capot d'inversion de poussée 13 par rapport à l'autre ce qui pourrait déséquilibrer l'aéronef dans la configuration d'inversion de poussée.

En cas de panne d'une unité de commande 33 ou 35 ou d'un onduleur 40, l'erreur de positionnement des actionneurs 15 et donc des panneaux mobiles 13, 17 est rendue suffisamment minimale pour être tolérée par le turboréacteur 5.

A titre d'exemple, les moyens de synchronisation électrique peuvent permettre un asservissement de manière mixte en couple-position afin d'optimiser le contrôle et de lisser tout prélèvement de puissance.

Par exemple dans les phases d'accélération et décélération, le pilotage du moteur 16 peut être basé sur un asservissement en couple de façon prépondérante avec limitation de survitesse, tandis que dans les phases stabilisée en vitesse peuvent être réalisées en régulant la vitesse et la limitation de couple.

De manière avantageuse, dans les modes de réalisation représentés aux figures 4 et 5, les éléments permettant de faire varier la section du canal annulaire 8 et également les éléments permettant l'inversion de poussée peuvent être regroupés.

Selon un mode de réalisation préférentiel, le système de contrôle comporte des moyens de blocage aptes à verrouillés les actionneurs 15 dans leur course ou en fin de course. Les moyens de blocage peuvent être sous la forme de verrous qui peuvent être rassemblés.

Comme indiqué plus haut, il existe deux types de verrous. Typiquement, le premier type est constitué de verrous primaires et secondaires 42 sont disposés chacun sur des actionneurs 15 d'un panneau mobile. Le second type est constitué d'un ou de plusieurs verrous tertiaires 43, isolés par rapport aux panneaux mobiles 13, 17 mais reliés à ces derniers par l'intermédiaire d'un lien structurant 45, tel que qu'un câble flexible ou non.

Typiquement, ce verrou tertiaire 43 est disposé à 6h par rapport aux panneaux mobiles 13, 17, en particulier du capot d'inversion de poussée 13. La direction 6h est prise relativement à la nacelle 1 lorsqu'elle est montée sur une aile d'un aéronef et lorsqu'elle est vue par la structure amont d'entrée d'air 2.

Parallèlement, il existe des moyens de blocage 47, ou « frein de tuyère secondaires», permettant de verrouiller ou de contrôler les volets 17 dans une position assurant la fermeture totale ou partielle du canal annulaire 8, par exemple par le biais des actionneurs. Ces freins 47 sont typiquement au nombre de deux et disposés chacun sur un panneau mobile 13, 17.

Selon le mode de réalisation représenté à la figure 4, les verrous primaires et secondaires 42 et les freins de tuyère 47 d'un même panneau mobile peuvent être disposés sur des actionneurs 15 différents, notamment deux actionneurs différents.

Selon une variante représentée à la figure 5, les verrous primaires et secondaires 42 et les freins de tuyère 47 d'un même panneau mobile peuvent être disposés sur un même actionneur.

Chaque unité de commande 33 ou 35 peut héberger d'autres fonctions comme le contrôle de dégivrage de la lèvre d'entrée d'air 2 et également le contrôle électronique des verrous primaire et secondaire 42.

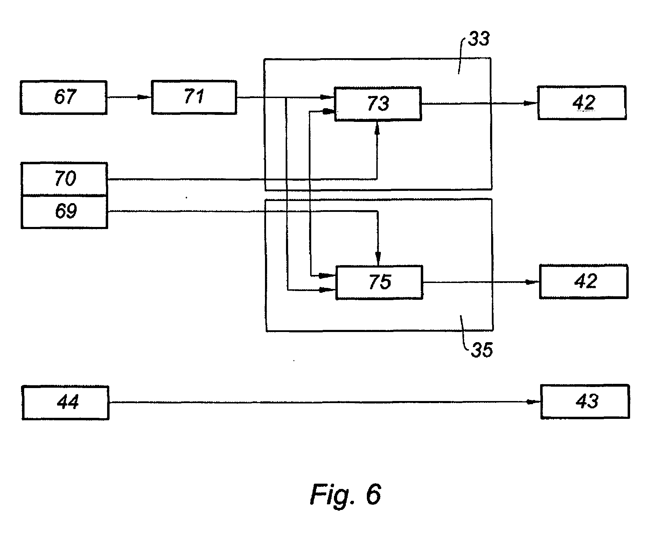

Ainsi, selon un mode de réalisation représenté à la figure 6, les verrous primaires et secondaires 42 et tertiaire 43 employés dans le cadre de l'invention sont commandés électriquement de manière distincte et indépendantes afin d'assurer une sécurité optimale en cas de panne conformément à la réglementation aéronautique (cs25-933). Cette réglementation exige une protection des systèmes de contrôle des inverseurs de poussée contre les risques de déploiement intempestif par la mise en place de trois lignes de défense assurant le verrouillage et d'un système de d'activation du déverrouillage dont la commande doit être distincte et autonome, selon un principe de ségrégation.

Le verrou tertiaire 43 est commandé par un premier calculateur d'aéronef 44 comportant des moyens pour verrouiller ou déverrouiller ledit verrou 43. Le premier calculateur d'aéronef est apte à traiter des données issues de l'aéronef, telles que des données altimétriques ou encore des données représentative du poids s'exerçant sur les roues du train d'atterrissage.

Concernant les verrous primaires et secondaires 42, ces derniers peuvent être contrôlés par l'intermédiaire de capteurs.

Les verrous primaires et secondaires 42 et/ou les capteurs sont reliés aux deux unités de commande 33 et 35. Les deux unités de commande 33 et 35 peuvent comporter chacune un moyen de synchronisation logique apte à déclencher l'actionnement dudit verrou primaire 42 de manière synchronisée. Pour ce faire, lesdits moyens de synchronisation sont reliés entre eux. Selon une variante, il est possible qu'un moyen de synchronisation logique soit employé à la place des deux. Ces moyens de synchronisation sont reliés chacun à un second calculateur d'aéronef 67 apte à traiter des données issues de l'aéronef, et également à un ou plusieurs calculateurs de nacelle 69 et 70 aptes à traiter des données issues du turboréacteur 5.

Le second calculateur d'aéronef 67 et le calculateur de nacelle 69 et 70 peuvent être externes aux unités de commande 33 et 35 ce qui permet d'améliorer encore la sécurité du système de commande des verrous primaires et secondaires 42.

Le second calculateur d'aéronef 67 traite typiquement des données de l'aéronef non liées au turboréacteur, telle que des données altimétriques ou des données représentative du poids s'exerçant sur les roues du train d'atterrissage.

Selon un mode de réalisation, le ou les calculateurs d'aéronef 69 et 70 peuvent être configurés pour synchroniser le contrôle de position des moteurs 16 par une commande électrique.

Afin d'être tolérant aux pannes simples électriques, le calculateur de nacelle 69 et 70 peut comprendre deux sources électriques indépendantes ou deux voies internes indépendantes et autonomes. Dans ce dernier cas, chaque voie peut comprendre une interface avec une source électrique propre, un ensemble d'onduleurs 40 qui commandent au moins une moitié des moteurs électriques 16, une carte électronique de pilotage des onduleurs 40 et leur gestion, un dispositif d'activation électrique et de contrôle du maintien mécanique de la structure pour la fonction tuyère variable, un dispositif d'activation électrique et de contrôle du maintien de moyens de blocage 42, 43, une interface de communication avec un calculateur de nacelle, une interface de communication entre les deux voies du calculateur nacelle 69, 70.

Cette architecture de calculateur permet de rendre le système de contrôle tolérant à une perte d'une source d'alimentation électrique tout en conservant les performances du système de contrôle, à une perte d'un ou d'un ensemble d'onduleurs de la même voie, à une perte d'activation (circuit ouvert) d'un moteur électrique d'actionnement, à une perte de la transmission mécanique de deux actionneurs adjacents ou encore à une perte d'un dispositif de maintien.

Ainsi, de manière avantageuse, le calculateur de nacelle 69 et 70 n'a pas besoin de redondance électronique et le nombre de composants est réduit.

Pour maintenir en position la tuyère secondaire, un ou les deux calculateurs de nacelle 69 et 70 peuvent piloter et maintenir en position les volets de tuyère à la position souhaitée. Plus avantageusement, la nacelle 1 peut comprendre en outre un dispositif de maintien mécanique immobilisant le déplacement des actionneurs 15 pour améliorer le rendement, la compacité et la fiabilité du système de contrôle. Cette fonction peut être de type « frein à manque de courant » afin de maintenir le verrouillage sans consommation d'électricité, la disponibilité étant assurée par le double pilotage de l'organe de commande du frein par les calculateurs de nacelle 69 et 70.

Dans le cas de la figure 6, chaque moyen d'arrêt interne 73 et 75 est relié à un calculateur de nacelle 69 et 70. Il est également possible qu'un calculateur de nacelle 69 et 70 comprenne deux sous unités distinctes aptes à commander chacune de manière autonome un moyen d'arrêt interne 73 et 75. Ainsi de manière avantageuse, une seule voie est suffisante pour la commande physique.

Dans le cas où les unités de commande 33 et 35 comprennent un ou plusieurs moyens logiques de synchronisation, la ou les sorties du ou des calculateurs de nacelle 69 et 70 sont reliées à une entrée du ou des moyens logiques de synchronisation qui relient à leur tour un moyen d'arrêt interne 73 ou 75. Autrement dit, l'ordre de « fermer » ou de « rester ouvert » destiné aux moyens d'arrêt interne 73 et 75 transite par le ou les moyens de synchronisation afin de synchroniser l'ouverture ou la fermeture desdits moyens de d'arrêt interne 73 et 75. Des systèmes de sécurité sont disposés de sorte à prévenir tout fonctionnement intempestif d'un ou des verrous primaires et secondaires 42.

Pour cela, un moyen d'arrêt externe 71 est interposé entre l'entrée des unités de commande 33 et 35 et le second calculateur d'aéronef 67. En outre chaque unité de commande 33 et 35 comporte un moyen d'arrêt interne 73 et 75 disposé à l'intérieur desdites unités 33 et 35 et également connectés au moyen d'arrêt externe 71.

Les moyens d'arrêt internes 73 et 75 et externe 71 agissent comme des interrupteurs en permettant ou non le passage des ordres de verrouillage ou de déverrouillage vers les verrous primaires 42. Dans cette perspective, les moyens d'arrêt internes 73 et 75 et externe 71 peuvent comprendre un organe de commande et un interrupteur. Ledit organe de commande peut alors être reliés directement à la sortie du ou des calculateurs 67 ou 69 et 70 et/ou au(x) moyen(s) de synchronisation.

Le second calculateur d'aéronef 67 et le calculateur de nacelle 69 et 70 agissent tous les deux sur l'ouverture ou la fermeture des moyens d'arrêt internes 73 et 75.

En outre, afin de diminuer tout risque d'actionnement intempestif d'un verrou primaire ou secondaire 42, les deux moyens d'arrêt internes 73 et 75 sont connectés électriquement.

Ainsi, en cas de nécessité d'actionner les deux verrous primaires et secondaires 42, le second calculateur d'aéronef 67 envoie un ordre de fermer le moyen d'arrêt externe 71.

Pour que les moyens d'arrêt internes 73 et 75 se ferment également, il faut que le calculateur de nacelle 69 envoie le même ordre que le second calculateur d'aéronef 67. Dans ce cas, les deux moyens d'arrêt internes 73 et 75 se ferment, actionnant alors les verrous primaires et secondaires 42 par l'intermédiaire du capteur 61.

Lorsque le moyen d'arrêt externe 71 est fermé par un mauvais ordre du second calculateur d'aéronef 67 non confirmé par le calculateur de nacelle 69, les deux moyens d'arrêt internes 73 et 75 restent ouverts ne déclenchant donc pas le déverrouillage des deux verrous primaires et secondaires 42.

Si, malgré l'ordre du calculateur de nacelle 69 de ne pas fermer les moyens d'arrêt internes 73 et 75, une de ses entrées envoie l'ordre de fermer un moyen d'arrêt interne 73 et 75, la liaison électronique entre les deux moyens d'arrêt internes 73 et 75 empêche la fermeture dudit moyen.

Bien que les moyens de blocage 42, 43 et les moyens de contrôle de ces derniers dont un mode de réalisation est représenté à la figure 6 sont décrits en liaison avec les moteurs et les moyens d'alimentation et de contrôle de ces dernier, il est possible d'avoir des moyens de blocage 42, 43 et leur moyens de contrôle dans une nacelle ne présentant pas un système de contrôle comportant deux unités de commande distinctes 33, 35, chacune étant configurée pour contrôler et alimenter au moins un moteur ni alimenté ni contrôlé par l'autre unité de commande.

En cas de vol, l'inverseur de poussée est généralement maintenu hors tension. Par conséquent, aucun courant électrique ne parcourt l'inverseur de poussée. Ceci permet de prévenir une mise en oeuvre intempestive d'origine électronique de l'inverseur de poussée.

Dans le cas des volets pour tuyère, la puissance électrique du calculateur de nacelle 69 et 70 est maintenue en vol pour permettre de déplacer la section de tuyère secondaire. En effet, suivant les différents régimes de croisière du turboréacteur, il est parfois nécessaire de faire varier le flux d'air secondaire et donc la largeur du canal annulaire 8.

Ainsi, selon un mode de réalisation, le calculateur de nacelle 69 et 70 intègre une commande externe des verrous primaires et secondaires 42, pour restaurer le niveau de ségrégation nécessaire. Cette commande peut être consolidée en interne du calculateur de nacelle 69 et 70 en introduisant une barrière de protection qui combine cette commande externe avec un ordre issu provenant du turboréacteur 5.

Par ailleurs, pour se conformer aux contraintes de sécurité, cette ligne de commande des moyens de blocage 42, 43 peut être confinée et isolée du reste du calculateur de nacelle 69 et 70.

Afin de permettre l'ouverture des verrous primaires et secondaires 42 même en cas d'une perte d'une voie du calculateur de nacelle 69 et 70, il est possible que chaque voie rendue autonome soit capable de piloter les deux verrous primaires et secondaires 42. Dans ce cas de figure, la commande est consolidée par une logique interne au calculateur de nacelle 69 et 70 pour empêcher toute activation intempestive.

Le calculateur de nacelle 69 et 70 peut intégrer en outre une commande du dispositif de maintien de la tuyère secondaire variable. Pour améliorer la disponibilité, chaque voie du calculateur de nacelle 69 et 70 peut être capable de désactiver l'ensemble des dispositifs de maintien.

Dans un autre mode de réalisation, le calculateur de nacelle 69 et 70 peut être configuré pour assurer le maintien de la structure sans introduire de dispositif mécanique supplémentaire, ou bien le maintien en position de la tuyère secondaire variable peut être assuré par un pilotage approprié du moteur en boucle de position.

## Revendications

1. Système de contrôle d'une pluralité d'actionneurs (15) aptes à déplacer un même panneau mobile (13, 17) appartenant à une nacelle (1) d'aéronef, ledit système comprenant au moins deux moteurs (16) aptes à entraîner lesdits actionneurs (15),
**caractérisé en ce qu'**il comporte en outre deux unités de commande distinctes (33, 35), chaque unité étant configurée pour contrôler et alimenter au moins un moteur ni alimenté ni contrôlé par l'autre unité de commande.

2. Système selon la revendication précédente, **caractérisé en ce que** les unités de commande (33, 35) sont dissociées et alimentées chacune par une source d'alimentation, les sources d'alimentation étant indépendantes les unes des autres.

3. Système selon la revendication 1, **caractérisé en ce que** les unités de commande (33, 35) sont regroupés au sein d'une unité principale.

4. Système selon l'une quelconque des revendication 1 à 3, **caractérisé en ce que** chaque unité (33, 35) délivre une puissance suffisante pour qu'un seul moteur puisse actionner tous les actionneurs du système (15). (15).

5. Système selon l'une quelconque des revendications précédentes, **caractérisé en ce qu'**il comporte en outre des moyens de blocage (42, 43) aptes à immobiliser les actionneurs (15).

6. Système selon la revendication précédente, **caractérisé en ce que** les moyens de blocage (42, 43) sont des verrous primaires (42) associés à un verrou tertiaire (43) alimenté par une source d'alimentation distincte des deux unités de commande (33, 35).

7. Système selon la revendication précédente, **caractérisé en ce que** les unités de commande (33, 35) comprennent chacun un moyen d'arrêt interne (73, 75) apte à arrêter l'alimentation des moyens de blocage, les deux moyens d'arrêt internes (73, 75) étant reliés entre eux et à un moyen d'arrêt externe (71) commandé indépendamment des unités de commande (33, 35)

8. Système selon la revendication précédente, **caractérisé en ce que** chaque moyen d'arrêt interne (73, 75) est apte à être commandé par un calculateur d'aéronef (67) configuré pour traiter des données issues de l'aéronef et par un calculateur de nacelle (70, 69) configuré pour traiter des données issues du turboréacteur (5), lesdits calculateurs (67 ; 70, 69) étant distincts et autonomes.

9. Système selon la revendication précédente, **caractérisé en ce que** le moyen d'arrêt externe (71) est apte à être commandé par le calculateur de l'aéronef (67).

10. Système selon la revendication 8 ou 9, **caractérisé en ce que** le calculateur de nacelle (70, 69) comporte un moyen de synchronisation électrique des moteurs (16).

11. Système selon l'une quelconque des revendications 8 à 9, **caractérisé en ce que** les signaux des états des moyens de blocage (42) sont gérés par le calculateur de nacelle (69, 70).

12. Système selon l'une quelconque des revendications 8 à 11, **caractérisé en ce que** le calculateur de nacelle (69, 70) est alimenté par deux sources électriques distinctes aptes à être maintenues sous tension au cours du vol de l'aéronef et/ou aptes à être coupées.

13. Système selon l'une quelconque des revendications 7 à 14, **caractérisé en ce que** chaque unité de commande (33, 35) comporte un moyen de synchronisation logique relié à un moyen d'arrêt interne (73, 75) et à une entrée d'un calculateur du turboréacteur (69, 70).

14. Système selon l'une quelconque des revendications 7 à 15, **caractérisé en ce que** chaque moyen d'arrêt interne (73, 75) et/ou externe (71) comprend un interrupteur et un dispositif de commande.

15. Nacelle (1) pour turboréacteur à double flux comportant une structure externe (6) délimitant un canal annulaire (8) d'écoulement du flux d'air froid, ladite structure externe (6) comprenant au moins un panneau mobile (13, 17) équipé d'un système de contrôle selon l'une quelconque des revendications précédentes.

## Patentansprüche

1. Steuersystem mehrerer Aktuatoren (15), die geeignet sind, um eine selbe bewegliche Platte (13, 17), die zu einer Luftfahrzeuggondel (1) gehört, zu bewegen, wobei das System mindestens zwei Motoren (16) umfasst, die geeignet sind, um die Aktuatoren (15) anzutreiben,
**dadurch gekennzeichnet, dass** es außerdem zwei getrennte Steuereinheiten (33, 35) umfasst, wobei jede Einheit konfiguriert ist, um mindestens einen Motor zu steuern und zu versorgen, der von der anderen Steuereinheit weder versorgt noch gesteuert wird.

2. System nach dem vorhergehenden Anspruch, **dadurch gekennzeichnet, dass** die Steuereinheiten (33, 35) getrennt und jeweils von einer Versorgungsquelle versorgt sind, wobei die Versorgungsquellen voneinander unabhängig sind.

3. System nach Anspruch 1, **dadurch gekennzeichnet, dass** die Steuereinheiten (33, 35) innerhalb einer Haupteinheit gruppiert sind.

4. System nach einem der Ansprüche 1 bis 3, **dadurch gekennzeichnet, dass** jede Einheit (33, 35) eine Leistung liefert, die ausreicht, damit ein einziger Motor alle Aktuatoren des Systems (15) betätigen kann.

5. System nach einem der vorhergehenden Ansprüche, **dadurch gekennzeichnet, dass** es außerdem Blockierungsmittel (42, 43) umfasst, die geeignet sind, die Aktuatoren (15) stillzustellen.

6. System nach dem vorhergehenden Anspruch, **dadurch gekennzeichnet, dass** die Blockierungsmittel (42, 43) Primärriegel (42) sind, die mit einem Tertiärriegel (43) verbunden sind, der von einer Versorgungsquelle versorgt wird, die von den zwei Steuereinheiten (33, 35) getrennt ist.

7. System nach dem vorhergehenden Anspruch, **dadurch gekennzeichnet, dass** die Steuereinheiten (33, 35) jeweils ein inneres Stoppmittel (73, 75) umfassen, das geeignet ist, um die Versorgung der Blockierungsmittel zu stoppen, wobei die zwei inneren Stoppmittel (73, 75) miteinander und mit einem äußeren Stoppmittel (71), das unabhängig von den Steuereinheiten (33, 35) gesteuert wird, verbunden sind.

8. System nach dem vorhergehenden Anspruch, **dadurch gekennzeichnet, dass** jedes innere Stoppmittel (73, 75) geeignet ist, um von einem Luftfahrzeugrechner (67) gesteuert zu werden, der konfiguriert ist, um Daten zu verarbeiten, die aus dem Luftfahrzeug stammen, und durch einen Gondelrechner (70, 69), der konfiguriert ist, um Daten zu verarbeiten, die aus dem Strahltriebwerk (5) stammen, wobei die Rechner (67; 70, 69) getrennt und autonom sind.

9. System nach dem vorhergehenden Anspruch, **dadurch gekennzeichnet, dass** das äußere Stoppmittel (71) geeignet ist, von dem Rechner (67) des Luftfahrzeugs gesteuert zu werden.

10. System nach Anspruch 8 oder 9, **dadurch gekennzeichnet, dass** der Gondelrechner (70, 69) ein Mittel zum elektrischen Synchronisieren der Motoren (16) umfasst.

11. System nach einem der Ansprüche 8 bis 9, **dadurch gekennzeichnet, dass** die Signale der Zustände der Blockierungsmittel (42) von dem Gondelrechner (69, 70) verwaltet werden.

12. System nach einem der Ansprüche 8 bis 11, **dadurch gekennzeichnet, dass** der Gondelrechner (69, 70) durch zwei getrennte elektrische Quellen versorgt wird, die geeignet sind, im Laufe des Flugs des Luftfahrzeugs unter Spannung gehalten zu werden und/oder geeignet sind, gekoppelt zu werden.

13. System nach einem der Ansprüche 7 bis 14, **dadurch gekennzeichnet, dass** jede Steuereinheit (33, 35) ein Mittel zur logischen Synchronisation umfasst, das mit einem inneren Stoppmittel (73, 75) und mit einem Eingang eines Rechners des Strahltriebwerks (69, 70) verbunden ist.

14. System nach einem der Ansprüche 7 bis 15, **dadurch gekennzeichnet, dass** jedes innere Stoppmittel (73, 75) und/oder äußere Stoppmittel (71) einen Schalter und eine Steuervorrichtung umfasst.

15. Gondel (1) für zweiflutiges Strahltriebwerk, die eine äußere Struktur (6) umfasst, die einen ringförmigen Kanal (8) zum Fließen des kalten Luftstroms umfasst, wobei die äußere Struktur (6) mindestens eine bewegliche Platte (13, 17) umfasst, die mit einem Steuersystem nach einem der vorhergehenden Ansprüche ausgestattet ist.

## Claims

1. A system for controlling a plurality of actuators (15) able to displace a same mobile panel (13, 17) belonging to an aircraft nacelle (1), said system comprising at least two motors (16) able to drive said actuators (15),
**characterized in that** it further includes two separate control units (33, 35), each unit being configured to control and power at least one motor neither powered nor controlled by the other control unit.

2. The system according to the preceding claim, **characterized in that** the control units (33, 35) are separate and each powered by a power source, the power sources being independent of one another.

3. The system according to claim 1, **characterized in that** the control units (33, 35) are grouped together within one primary unit.

4. The system according to any one of claims 1 to 3, **characterized in that** each unit (33, 35) delivers sufficient power for a single motor to be able to actuate all actuators of the system (15).

5. The system according to any one of the preceding claims, **characterized in that** it further includes blocking means (42, 43) able to immobilize the actuators (15).

6. The system according to the preceding claim, **characterized in that** the blocking means (42, 43) are primary bolts (42) associated with a tertiary bolt (43) powered by a power source separate from the two control units (33, 35).

7. The system according to the preceding claim, **characterized in that** the control units (33, 35) each comprise an internal stop means (73, 75) able to stop the power supply of the blocking means, the two internal stop means (73, 75) being connected to each other and an external stop means (71) controlled independently of the control units (33, 35).

8. The system according to the preceding claim, **characterized in that** each internal stop means (73, 75) is adapted to be controlled by an aircraft computer (67) configured to process data coming from the aircraft and by a nacelle computer (70, 69) configured to process data coming from the turbojet engine (5), said computers (67; 70, 69) being separate and autonomous.

9. The system according to the preceding claims, **characterized in that** the external stop means (71) is adapted to be controlled by the aircraft computer (67).

10. The system according to claim 8 or 9, **characterized in that** the nacelle computer (70, 69) includes means for electrical synchronization of the motors (16).

11. The system according to any one of claims 8 to 9, **characterized in that** the signals of the states of the blocking means (42) are managed by the nacelle computer (69, 70).

12. The system according to any one of claims 8 to 11, **characterized in that** the nacelle computer (69, 70) is powered by two separate electrical power sources adapted to be kept powered on during the flight of the aircraft and/or adapted to be cut

13. The system according to any one of claims 7 to 14, **characterized in that** each control unit (33, 35) includes a logic synchronization means connected to an internal stop means (73, 75) and an input of a computer of the turbojet engine (69, 70).

14. The system according to any one of claims 7 to 15, **characterized in that** each internal (73, 75) and/or external (71) stop means comprises a switch and a control device.

15. A nacelle (1) for a dual-flow turbojet engine including an outer structure (6) defining an annular flow channel (8) of the cold air flow, said outer structure (6) comprising at least one mobile panel (13, 17) equipped with a control system according to any one of the preceding claims.
